# EUROPEAN PATENT SPECIFICATION

(11) **EP 3 511 215 B1**
(45) Date of publication and mention of the grant of the patent: **11.10.2023**
(21) Application number: 16915769.0
(22) Date of filing: 12.09.2016
(51) Int. Cl.: B60W 10/26, B60K 6/445, B60W 10/06, B60W 10/08, B60W 20/13, H01M 10/44, H01M 10/48, H02J 7/00, B60W 20/15

(54) **VEHICLE**
FAHRZEUG
VÉHICULE

(43) Date of publication of application: 17.07.2019
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: KUWANO, Yuuki, Tokyo 105-8001 (JP); SHIMIZU, Yosuke, Tokyo 105-8001 (JP); HAGIWARA, Keizo, Tokyo 105-8001 (JP)
(74) Representative: AWA Sweden AB
(86) International application number: PCT/JP2016/076859
(87) International publication number: WO 2018/047351

(56) References cited:
- EP-A1- 2 572 951
- JP-A- 2001 103 609
- JP-A- 2003 009 305
- JP-A- 2003 102 133
- JP-A- 2008 201 292
- JP-A- 2015 120 485
- JP-A- 2016 004 649
- US-A1- 2002 195 288
- US-A1- 2007 024 244

## Description

The present invention relates to a vehicle mounting an internal combustion engine and a main circuit battery as power sources.

### BACKGROUND

Generally, hybrid vehicles are known on which, in addition to an internal combustion engine serving as a power source to rotate wheels, a battery is mounted and that uses a motor as a second power source. For example, in Patent Literature 1, a hybrid automobile having power dividing and coupling mechanisms has been proposed in which a ring gear is provided to a drive axis that is rotationally driven and a motor is attached thereto via a speed reduction gear. In this hybrid automobile, battery charge/discharge request power is set based on battery temperature and a battery state of charge (SOC) estimation value. Vehicle request power and an amount of loss are added to this battery charge/discharge request power to determine internal combustion engine power and the battery charge/discharge electrical power is controlled.

Document EP 2572951 A1 discloses a SOC of a power storage device provided in an electrically powered vehicle and a control method of the same.

Document US 2002/195288 A1 relates to a hybrid vehicle, and in particular, to a warm-up of a battery.

Document US 2007/024244 A1 relates to a system and method of controlling temperature of a vehicle power source.

### CITATION LIST

### PATENT LITERATURE

[PATENT LITERATURE 1] Jpn. Pat. Appln. KOKAI Publication No. 2009-96360

### SUMMARY

### TECHNICAL PROBLEM

Normally, in order to enhance fuel economy characteristics of a hybrid vehicle, it is efficient to operate the vehicle at a high engine efficiency point as much as possible. At that time, the difference between vehicle request power requested by a driver and engine power generated by an internal combustion engine is complemented by driving a motor by a battery. However, charge/discharge characteristics of the battery remarkably drop at low temperature, which decreases a degree of freedom of engine operation points and, as a result, deteriorates fuel economy. As a countermeasure of this, it is considered to install a heater or the like to raise temperature of the battery. However, from the point of view of cost reduction and size reduction, a simple temperature rising control system without additional members is desired.

Additionally, mechanical and electrical losses incurred in the hybrid vehicle having power dividing and coupling mechanisms described in Patent Literature 1 affect how good or bad the efficiency is depending on the rotation number of each gear and operation points of a generator and the motor. Also, load of a direct current link part from auxiliary apparatuses is changing depending on a situation. For these reasons, even if the losses are set in a feed-forward manner, errors occur between a battery output target value and a detection value. Consequently, when the battery output target value is set as battery maximum charge/discharge electrical power, the battery voltage might reach a protection voltage (overvoltage or undervoltage), which results in electrical separation of the battery of which temperature is to be raised.

Embodiments, thus, provide a vehicle equipped with power dividing and coupling mechanisms, which controls battery charge/discharge electrical power in a feed-back manner and raises temperature of a main circuit battery in a short time as well as outputs desired vehicle request torque.

### SOLUTION TO PROBLEM

According to an embodiment of a vehicle comprising: an internal combustion engine that outputs mechanical energy; a power dividing mechanism that comprises a gear mechanism including a sun gear and a ring gear and divides to output the mechanical energy; a generator that converts at least a part of the mechanical energy to electrical energy; a converter that controls operation of the generator; an inverter that is electrically connected to the converter via a direct current link; a main circuit battery that is electrically connected to the direct current link; a motor that is driven by electrical energy supplied from the inverter; a power coupling mechanism that is mechanically connected to a rotation axis of the motor and couples mechanical energy generated by the motor and mechanical energy divided and transmitted via a transmission member from the power dividing mechanism; an axle that is driven by the mechanical energy coupled by the power coupling mechanism; and a control unit that controls temperature of the main circuit battery; wherein the control unit comprises: respective electrical power maps of battery maximum discharge electrical power and battery maximum charge electrical power defined in terms of battery temperature and a state of charge (SOC) estimation value detected from the main circuit battery, the respective electrical power maps being preset; an SOC usable range map that includes SOC upper limit values and SOC lower limit values defined in terms of the battery temperature of the main circuit battery, the SOC usable range map being preset; a charge and discharge command unit that issues a battery discharge command when the battery SOC estimation value is equal to or larger than a SOC upper limit value and issue a battery charge command when the battery SOC estimation value is equal to or smaller than a SOC lower limit value, the SOC upper limit value and the SOC lower limit value being set from the detected battery temperature using the SOC usable range map; characterized by that the vehicle further comprises a battery output target setting unit that sets, when the battery discharge command is issued, the battery maximum discharge electrical power selected from the electrical power map to be a battery output target value for raising temperature and set, when the battery charge command is issued, the battery maximum charge electrical power from the electrical power map to be the battery output target value for raising temperature; a battery output correction unit that computes a battery output correction value for raising temperature from a difference between the battery output target value for raising temperature and a battery output detection value detected from the main circuit battery; a PI control unit that calculates a direct current link power correction value for correcting generator torque by performing a PI control on the battery output correction value; a torque correction unit that calculates a generator torque correction value based on the direct current link power correction value, a gear number of the sun gear and a gear number of the ring gear of the power dividing mechanism, and rotation numbers of the motor and the generator; and an internal combustion engine output correction unit that corrects internal combustion engine output based on the generator torque correction value, the gear number of the sun gear and the gear number of the ring gear, and the rotation numbers of the motor and the generator; and wherein the control unit is configured to, when determining the SOC upper limit value, the SOC lower limit value, the battery maximum discharge electrical power, and the battery maximum charge electrical power, use a lowest battery temperature in the vehicle during low temperature, and use a highest battery temperature in the vehicle during high temperature as battery temperature to be input, and prevent a driving system from being stopped by temperature or voltage protection due to variation of battery temperature in the driving system and control output of the main circuit battery to a target value to raise the temperature of the main circuit battery while satisfying vehicle request torque.

### BRIEF DESCRIPTION OF THE DRAWINGS

FIG. 1 is a diagram showing a conceptual configuration of a driving system of a hybrid vehicle according to an embodiment.
FIG. 2 is a diagram showing a conceptual configuration of a hybrid controller of the driving system.
FIG. 3 is a diagram showing a conceptual configuration of a battery temperature control unit in the hybrid controller.
FIG. 4 is a diagram showing a configuration that performs a command calculation of generator and motor torque in the hybrid controller.
FIG. 5 is a diagram conceptually showing an operation point of an internal combustion engine of the driving system.
FIG. 6 is a diagram showing characteristics for use in determination of battery output limit values of the driving system.
FIG. 7 is a diagram showing an example of a battery maximum discharge electrical power map.
FIG. 8 is a diagram showing transitions of temperature rising of the main circuit battery and a battery SOC usable range in time series.
FIG. 9 is a diagram showing the SOC usable ranges with SOC upper limit values and SOC lower limit values determined by battery temperature of the main circuit battery based on FIG. 8.

### DETAILED DESCRIPTION

The invention is defined by the appended claims. Embodiments will now be described in detail with reference to the drawings.

### [First Embodiment]

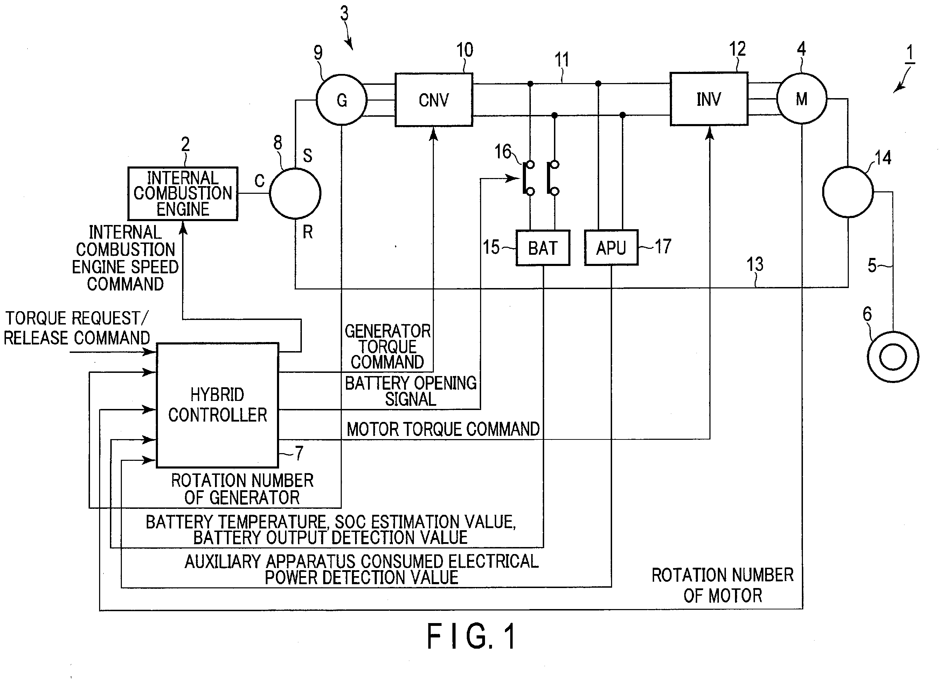

FIG. 1 is a block diagram showing a conceptual configuration of a driving system of a hybrid vehicle according to a first embodiment. A vehicle of the present embodiment is a hybrid vehicle that comprises an internal combustion engine and a motor driven by a main circuit battery as power sources, and power dividing and coupling mechanisms that are planetary gear mechanisms each including a sun gear.

This driving system 1 is configured with an internal combustion engine 2 that serves as a main power source, a power transmission system 3 that divides and couples mechanical energy generated by the internal combustion engine 2, a motor 4 that serves as an auxiliary power source provided in the power transmission system 3, a wheel 6 joined to the power transmission system 3 via an axle 5, and a hybrid controller [control unit] 7 that controls configuration elements in the driving system 1. The internal combustion engine 2 is a power source that burns fossil fuel inside an engine such as a gasoline engine or a diesel engine, a gas turbine, or the like to generate mechanical energy. In this example, it is described that the main power source is the internal combustion engine 2 and the auxiliary power source is the motor, though conversely, it is also a possible configuration that the main power source is the motor 4 and the auxiliary power source is the internal combustion engine 2.

The power transmission system 3 is configured with a power dividing mechanism 8 that divides mechanical energy into at least two portions, a generator 9 that converts the first portion of the divided mechanical energy to electrical energy of alternating current, for example three-phase alternating current, a converter 10 that controls the generator 9 and produces direct current voltage from the alternating current, a direct current link 11 configured to transfer the direct current voltage (electrical energy), an inverter 12 that produces alternating current, for example three-phase alternating current, voltage from the direct current, and controls driving of the motor 4 and a power coupling mechanism 14 that couples auxiliary mechanical energy generated by the motor 4 and the second portion of the mechanical energy divided by the power dividing mechanism 8 transmitted by a transmission member 13.

The mechanical energy coupled by this power coupling mechanism 14 rotates the wheel 6 via the axle 5. Note that mechanical energy and electrical energy are referred to as power for description when they do not need to be distinguished in the following description.

Each of the power dividing mechanism 8 and the power coupling mechanism 14 of the present embodiment is configured with a planetary gear mechanism. This planetary gear mechanism, which is a publicly-known configuration, is equipped with, for example, a sun gear S, a planet gear P circumscribed to the sun gear S, a ring gear R in which the planet gear P is inscribed, and a planet carrier C that rotates along the orbit of the planet gear P. In the present embodiment, the planet carrier C is rotated by the mechanical energy produced in the internal combustion engine 2. The rotation power of the sun gear S is transmitted to the generator 9. The rotation power of the ring gear R is transmitted to the power coupling mechanism 14 through the transmission member 13.

The generator 9 converts the mechanical energy supplied via the sun gear S of the power dividing mechanism 8 to the electrical energy of the three-phase alternating current electrical power. The converter 10 has a control function to control power generating operation of the generator 9 and converts the three-phase alternating current electrical power output from the generator 9 to the direct current electrical power. The direct current electrical power supplied from the direct current link 11 is converted to the alternating current electrical power to be output to the motor 4 by the inverter 12. Also, alternating current electrical power supplied from the motor 4 in regenerating operation is converted to direct current electrical power to be output to the direct current link 11 by the inverter 12.

The motor 4 of the present embodiment is driven by the alternating current electrical power supplied from the inverter 12. The electrical energy is converted to the mechanical energy to be output to the power coupling mechanism 14 by the motor. However, the motor 4 is not limited to a motor driven by the alternating current, and it is also possible to use pulsed wave or the like for electrical driving power.

In addition, a main circuit battery 15 is connected via a contactor 16 to the direct current link 11 that joins the converter 10 and the inverter 12. The contactor 16, which is a publicly-known electromagnetic contactor, is able to be opened by utilizing electromagnetic force to electrically separate the main circuit battery 15. A control signal that operates the contactor 16 is regarded as a battery opening signal. It is considered that electrically separating the main circuit battery 15 and opening the contactor 16 are synonymous in the following description.

Other than the above, an auxiliary apparatus power unit (APU) 17 is connected to this direct current link 11 to supply electrical energy to an auxiliary apparatus such as an air conditioner that is not shown. The main circuit battery 15, which is a rechargeable battery, is configured as, for example, a battery module including a plurality of secondary battery cells, and able to be charged by the generator 9. The main circuit battery 15, to which an information sending function is added, provides the hybrid controller 7 with information such as battery temperature, a battery state of charge (SOC) estimation value, and battery output detection value. The auxiliary apparatus power unit 17 provides the hybrid controller 7 with an auxiliary apparatus consumed electrical power detection value.

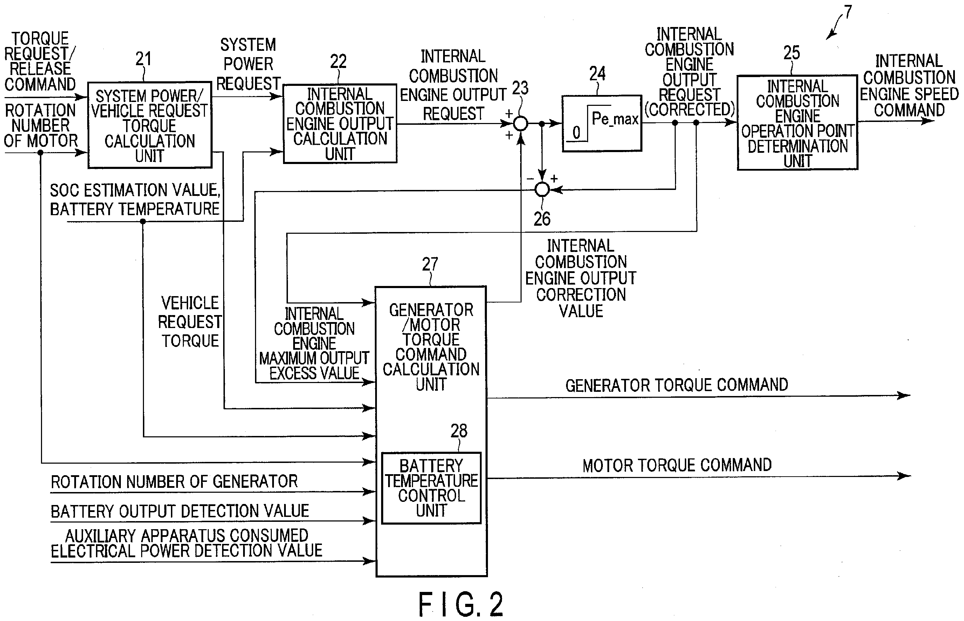

The hybrid controller 7 integrates control of the overall system and performs calculation process described below. For example, the hybrid controller 7 is configured with an information processing apparatus having a calculation function and a memory function (for example, a computer and the like) and a memory (not shown). FIG. 2 shows an exemplary block configuration.

This hybrid controller 7 has a system power/vehicle request torque calculation unit 21, an internal combustion engine output calculation unit 22, an addition unit 23, a limiter unit 24, an internal combustion engine operation point determination unit 25, and a generator/motor torque command calculation unit (hereinafter referred to as a torque command calculation unit) 27. This torque command calculation unit 27 includes a battery temperature control unit 28 mentioned later. The hybrid controller 7 calculates a system power request and vehicle request torque from a torque request/release command by a driver, and a rotation number of the motor.

An internal combustion engine output request is then calculated from the system power request, the battery SOC estimation value and the battery temperature. Under constraint conditions of battery maximum output determined by the SOC and the temperature, the internal combustion engine 2 yields output at a high efficiency point of the internal combustion engine 2 as much as possible. This means that, basically, battery output is not explicitly controlled.

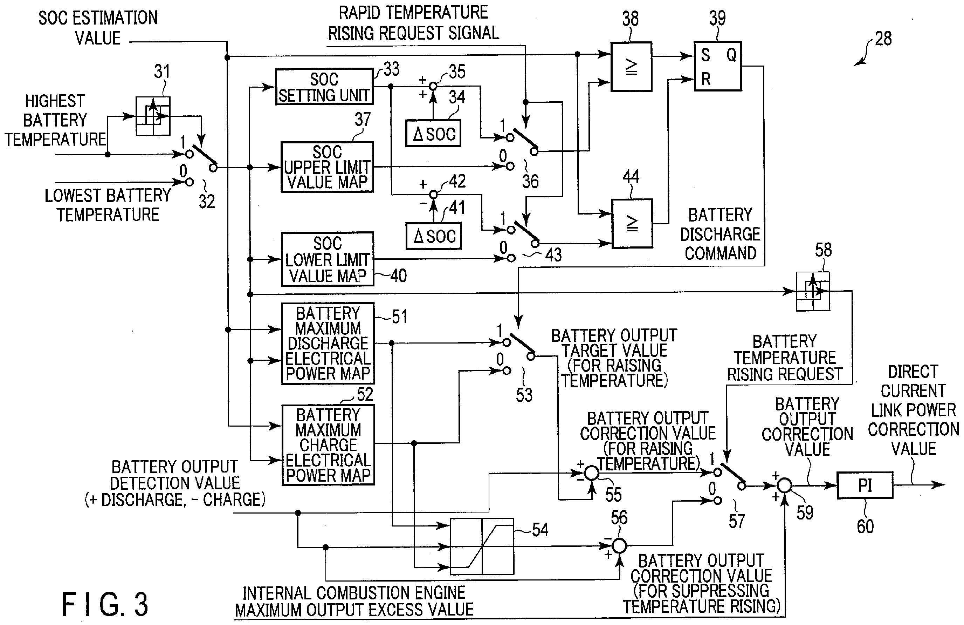

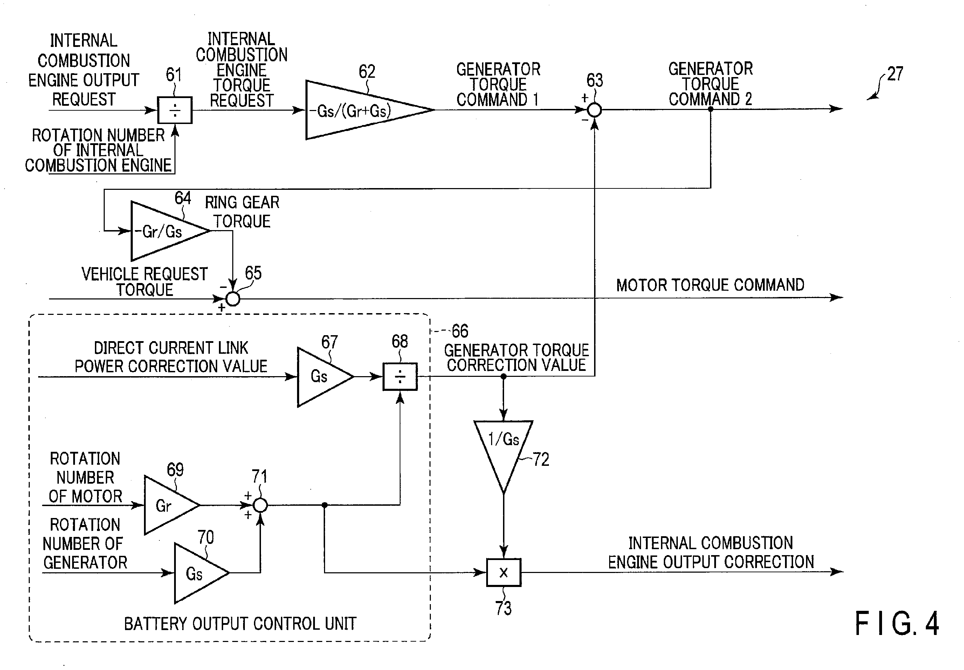

Command and signal flow in each configuration element of the vehicle of the present embodiment will be described below with reference to FIGS. 2 to 4. FIG. 2 is a block diagram showing a conceptual configuration of the hybrid controller of the driving system, FIG. 3 is a block diagram showing a conceptual configuration of the battery temperature control unit in the hybrid controller, and FIG. 4 is a block diagram showing a configuration that performs a command calculation of generator and motor torque in the hybrid controller.

First, the torque request/release command issued from driving operation of the driver depending on a vehicle driving situation (hill-climbing, acceleration and deceleration, or the like) and the rotation number information of the motor 4 are input to the system power/vehicle request torque calculation unit 21 shown in FIG. 2. The system power/vehicle request torque calculation unit 21 outputs the system power request and the vehicle request torque that suggest how much power is required.

Based on this system power request, the SOC estimation value information that indicates remaining level of the main circuit battery 15, and the battery temperature information, the internal combustion engine output calculation unit 22 calculates the internal combustion engine output request. An internal combustion engine output correction value mentioned later is added to this calculation result, which is output to the limiter unit 24 by the addition unit 23.

The limiter unit 24 corrects the internal combustion engine output request (internal combustion engine output request value) that has been corrected with the internal combustion engine output correction value so that the internal combustion engine output request is limited within a range from a zero value to a maximum output value (Pe_max) of the internal combustion engine 2. The corrected value is output to the internal combustion engine operation point determination unit 25 and the torque command calculation unit 27 as a corrected internal combustion engine output value request.

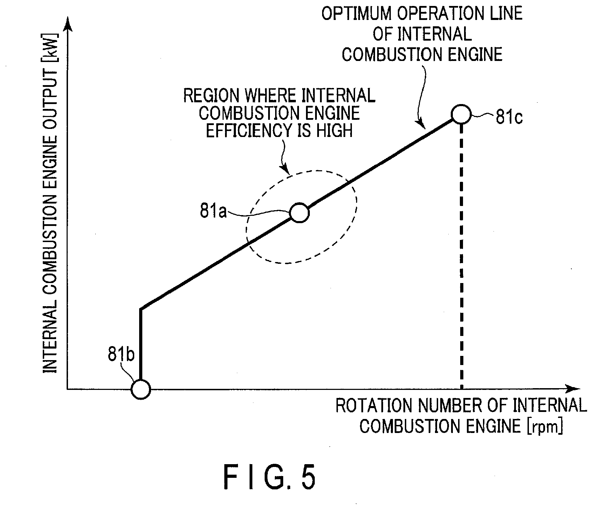

The internal combustion engine operation point determination unit 25 uses this internal combustion engine output request to derive an internal combustion engine speed command from a rotation number of the internal combustion engine according to the internal combustion engine operation point shown in FIG. 5 and outputs the internal combustion engine speed command to the internal combustion engine 2. Note that FIG. 5 conceptually shows operation points of the internal combustion engine of the driving system and, specifically, shows an optimum operation line of the internal combustion engine in terms of internal combustion engine output versus the rotation number of the internal combustion engine. Internal combustion engine operation points 81a, 81b, and 81c discretely and arbitrarily set on the optimum operation line are herein shown. In this example, the internal combustion engine operation point 81a is set in a region where efficiency is high within an allowable range of battery output performance.

A subtraction unit 26 subtracts, from the corrected internal combustion engine output request that has been output by the limiter unit 24, the internal combustion engine output value request output by the addition unit 23 to output the difference to the torque command calculation unit 27 as an internal combustion engine maximum output excess value.

The torque command calculation unit 27 includes the battery temperature control unit 28. In addition to the battery temperature, the SOC estimation value, the battery output detection value, and the auxiliary apparatus consumed electrical power detection value mentioned above, the rotation number of the motor, a rotation number of the generator, the internal combustion engine maximum output excess value, and the vehicle request torque are input to the torque command calculation unit 27, which calculates and outputs a generator torque command, a motor torque command, and a generator torque command correction value by a calculation process mentioned later.

Each electrical power map is now described, which will also be mentioned later.

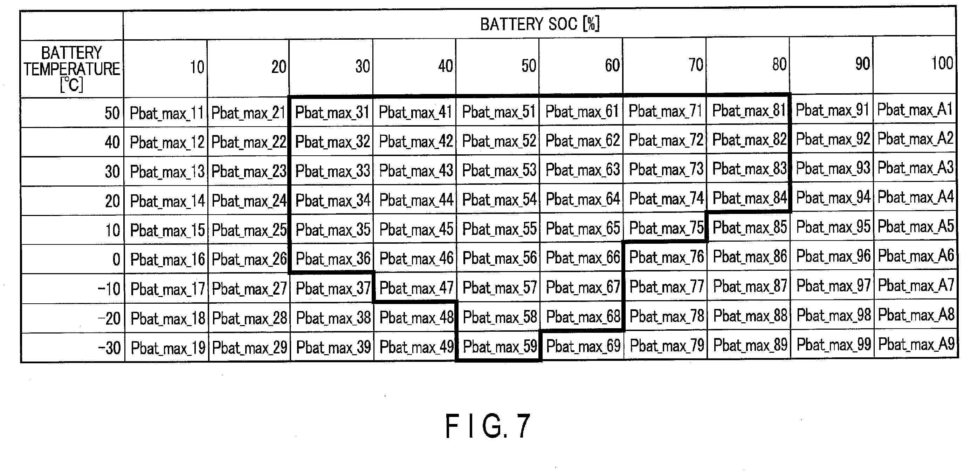

FIG. 7 is a diagram showing an example of a battery maximum discharge electrical power map. Maximum discharge electrical power of the main circuit battery 15 (Pbat_max_XX, XX: 11 to A9) are set per relation of the battery temperature (-30°C to +50°C) and the battery SOC (10% to 100%). In setting of the maximum discharge electrical power of FIG. 7, as the battery temperature goes from -30°C to +40°C, the electrical power values are set to become larger, and as the battery SOC goes from 10% to 100%, the electrical power values are set to become larger. This means that, as a setting example of the electrical power values, there are relations given by Pbat_max_59 < Pbat_max_52 (SOC 50%) for the battery temperature, and Pbat_max_14 < Pbat_max_A4 (20°C) for the battery SOC.

Consequently, in distribution of the discharge electrical power values, the electrical power value under a condition where the battery temperature is -30°C and the battery SOC is 10% is set to be the smallest, and the electrical power value under a condition where the battery temperature is 40°C and the battery SOC is 100% is set to be the largest. Note that, in the present embodiment, in a normal state, since a usage range with the battery temperature up to 40°C is set, when the temperature goes over 40°C, suppressing temperature rising or cooling down is required. Thus, the battery SOC when the battery temperature is 50°C is set to be smaller than the battery SOC when the battery temperature is 40°C. Of course, this setting differs depending on performance of the main circuit battery and is not necessarily limited.

Electrical power values of a battery maximum charge electrical power map are distributed conversely to those of the battery maximum discharge electrical power map. The larger battery SOC is translated as the smaller charge electrical power, and the higher battery temperature is translated as the smaller charge electrical power. Consequently, in distribution of the charge electrical power values, the electrical power value under a condition where the battery temperature is 40°C and the battery SOC is 10% is set to be the largest, and the electrical power value under a condition where the battery temperature is -30 and the battery SOC is 100% is set to be the smallest.

In the present embodiment, practical battery SOC in association with battery temperature is set within a range surrounded by a thick line frame shown in FIG. 7. For example, the battery SOC is 50% when the battery temperature is -30°C, the battery SOC is 30% to 60% when the battery temperature is 0°C, and the battery SOC is 30% to 80% when the battery temperature is 40°C. These practical ranges of the SOC and electrical power values in association with battery temperature are appropriately set depending on characteristics of the main circuit battery, and not limited to the examples shown in FIG. 7.

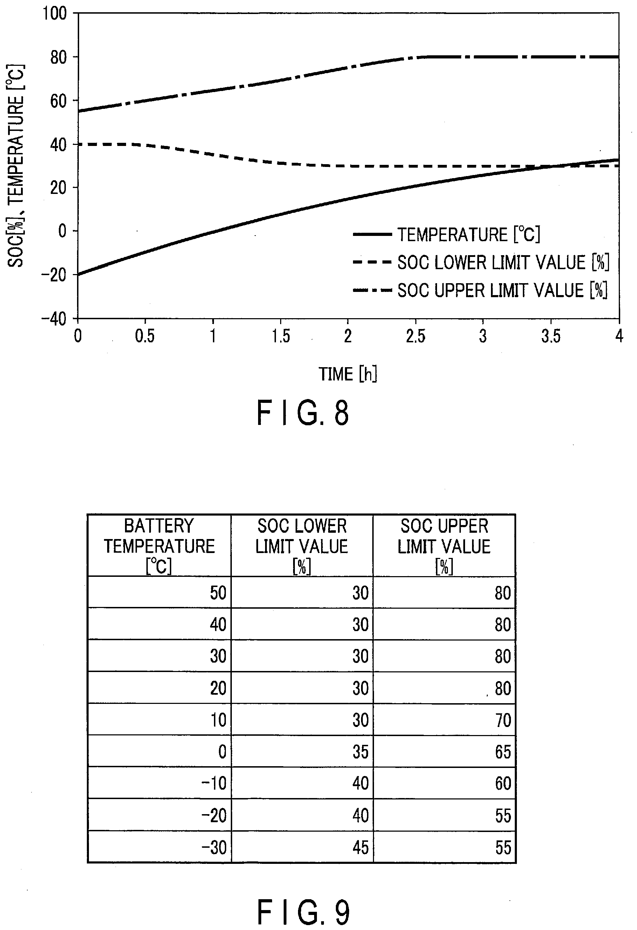

FIG. 8 is a diagram showing transitions of temperature rising of the main circuit battery and a battery SOC usable range in time series. FIG. 9 is a diagram showing the SOC usable ranges with SOC upper limit values and SOC lower limit values determined by battery temperature of the main circuit battery based on FIG. 8.

FIG. 8 shows an example of the upper limit values and the lower limit values of the battery SOC (%) along with temperature rising characteristics (°C) of the main circuit battery 15. Change in upper limit values and lower limit values of the battery SOC (%) when the temperature of the main circuit battery 15 is raised from -20°C to 30°C as time passes in a manner mentioned later is shown in time series. FIG. 9 is an SOC usable range map that numerically shows usable ranges with the SOC lower limit values and the SOC upper limit values of the main circuit battery 15 with respect to arbitrary battery temperature based on the characteristics in FIG. 8. In this example, the SOC lower limit value goes down and the SOC upper limit value goes up along with temperature rising of the main circuit battery 15, which implies that the battery SOC range has a trend to enlarge along with temperature rising.

The battery temperature control unit 28 provided in the torque command calculation unit 27 will be described with reference to FIG. 3. This battery temperature control unit 28 outputs a direct current link power correction value to a battery output control unit 66 mentioned later.

First, as for a schmitt trigger unit 31, highest battery temperature (or highest battery temperature) and lowest battery temperature are input to input terminals 1 and 0 of a changeover switch 32, respectively. The schmitt trigger unit 31 utilizes a threshold value having hysteresis characteristics to the highest battery temperature of the main circuit battery 15 to eliminate fluctuation of a detection signal. The schmitt trigger unit 31 outputs the detection signal as a switching signal to a switching terminal of the changeover switch 32. The highest or lowest battery temperature selected by the changeover switch 32 (hereinafter, referred to as battery temperature) is output to each of an SOC setting unit 33, an SOC upper limit value map 37, an SOC lower limit value map 40, a battery maximum discharge electrical power map 51, a battery maximum charge electrical power map 52, and a schmitt trigger unit 58. The highest battery temperature and the lowest battery temperature are measured temperature measured either in the driving system 1 or in the vehicle. The SOC upper limit value map 37 and the SOC lower limit value map 40 are maps that are spanned, similarly to the battery maximum charge electrical power map mentioned above, for example, by the battery temperature and the battery SOC as shown in FIG. 9.

The SOC setting unit 33 outputs a preset SOC setting value to an addition unit 35 and a subtraction unit 42 depending on input of the battery temperature. The addition unit 35 adds a fixed value ΔSOC that gives an arbitrary width to the SOC setting value. This ΔSOC, which is a slight SOC value, for example, a fixed value of about 1%, is added to the setting value. Additionally, the subtraction unit 42 subtracts ΔSOC from the setting value. These addition and subtraction allow the setting value to have a slight range (width) . For example, when the SOC setting value is 50%, charge and discharge are performed with SOC setting value having the width from 49% to 51%. With this narrow width, charge and discharge can be switched in a short interval, and it is thus expected for temperature rising to be more efficient and more rapid than temperature rising when charge and discharge are performed with a wide width having discharge maximum output or charge maximum output.

The SOC setting value shifted to an upper limit side by the addition unit 35 (for example, 51%) is input to an input terminal 1 of a changeover switch 36 for use in rapid temperature rising. The SOC upper limit value output from the SOC upper limit value map 37 is input to the other input terminal 0. Similarly, the SOC setting value shifted to a lower limit side by the subtraction unit 42 (for example, 49%) is input to an input terminal 1 of a changeover switch 43 for use in rapid temperature rising. The SOC lower limit value output from the SOC lower limit value map 40 is input to the other input terminal 0. These changeover switches 36 and 43 are both switched by a rapid temperature rising request signal sent out by the driver's operation. An upper and lower limit setting unit of the battery SOC are configured with these SOC upper limit value map 37 and SOC lower limit value map 40.

The SOC setting value or the SOC upper limit value output from the changeover switch 36 is input to a comparison unit 38 to be compared with the battery SOC estimation value (hereinafter, referred to as SOC estimation value). In this comparison, when the SOC estimation value ≥ the SOC setting value, or the SOC estimation value ≥ the SOC upper limit value, a set signal S is output to a flip-flop circuit 39. Similarly, the SOC setting value or the SOC lower limit value output from the changeover switch 43 is input to a comparison unit 44 to be compared with the SOC estimation value. In this comparison, when the SOC estimation value ≥ the SOC setting value, or the SOC estimation value ≥ the SOC lower limit value, a reset signal R is output to the flip-flop circuit 39. This flip-flop circuit 39 inputs a battery discharge command to a switching terminal of a changeover switch 53 mentioned later. This flip-flop circuit 39 is a charge/discharge command unit.

The highest battery temperature or the lowest battery temperature is input to the battery maximum discharge electrical power map 51 from the changeover switch 32, and the SOC estimation value is further input thereto. In the battery maximum discharge electrical power map 51, a preset battery maximum discharge electrical power (Pbat_max) is selected based on the battery temperature and the battery SOC (SOC estimation value) as seen in FIG. 7, which is output to an input terminal 1 of the changeover switch 53 and a variable limiter unit 54.

Similarly, the highest battery temperature or the lowest battery temperature is input to the battery maximum charge electrical power map 52 from the changeover switch 32, and the SOC estimation value is further input thereto. In the battery maximum charge electrical power map 52, a preset battery maximum charge electrical power is selected based on the battery temperature and the battery SOC (SOC estimation value), which is output to the other input terminal 0 of the changeover switch 53 and the variable limiter unit 54. These battery maximum discharge electrical power map 51 and battery maximum charge electrical power map 52 are regarded as an electrical power calculation unit.

The changeover switch 53 is switched by the battery discharge command mentioned above, which causes the battery maximum discharge electrical power or the battery maximum charge electrical power to be output to a subtraction unit 55 as a battery output target value (for raising temperature) . The changeover switch 53 is a battery output target setting unit. The subtraction unit 55 subtracts the battery output target value from the battery output detection value (+ discharge, - charge) to output the result to an input terminal of a changeover switch 57.

The variable limiter unit 54, which performs range limitation such that the output value of the battery maximum discharge electrical power map 51 is an upper limit and the output value of the battery maximum charge electrical power map 52 is a lower limit, outputs the battery output detection value that is within the range. The battery output detection value output from the variable limiter unit 54 is output to a subtraction unit 56. The subtraction unit 56 subtracts the battery output detection value limited by the upper and lower limits from the current battery output detection value that has not passed through the variable limiter unit 54. The difference by this subtraction, which is excess of the current battery output detection value, is output to the other input terminal 0 of the changeover switch 57 as a battery output correction value (for suppressing temperature rising). Note that unless this excess occurs, the battery output correction value is zero and the subtraction unit 56 does not perform correction on the direct current link power. Note that these subtraction units 55 and 56 are regarded as the battery output target setting unit.

Output of the schmitt trigger unit 58 based on the battery temperature output from the changeover switch 32 results in switching operation of the changeover switch 57. This changing operation causes the battery output correction value for raising temperature or suppressing temperature rising to be output to an addition unit 59. The addition unit 59 adds the internal combustion engine maximum output excess value output from the subtraction unit 26 mentioned above (see FIG. 2) to the battery output correction value for this raising temperature or suppressing temperature rising to output the result as the battery output correction value to a PI control unit 60. The PI control unit 60 suppresses offset with a PI control (proportional integral control or proportional integral process) while producing a preset direct current link power correction value. The PI control unit 60 is regarded as a direct current link power correction unit. In the system configuration of the present embodiment, the subtraction unit 55 and the PI control unit 60, and the subtraction unit 56 and the PI control unit 60 respectively achieve a feed-back control function.

Then, a signal processing of signals and commands in the torque command calculation unit 27 will be described with reference to FIG. 4.

First, the division unit 61 divides the internal combustion engine output request output from the limiter unit 24 by the rotation number of the internal combustion engine output from the internal combustion engine 2 to compute an internal combustion engine torque request. Next, a multiplication unit 62 multiplies this internal combustion engine torque request by a ratio -Gs/(Gr + Gs) to compute a generator torque command 1. Herein, it is assumed that Gs denotes a gear number of the sun gear and Gr denotes a gear number of the ring gear.

Furthermore, the subtraction unit 63 subtracts, from the generator torque command 1, a generator torque correction value from the battery output control unit 66 mentioned later to calculate a generator torque command 2. The generator torque command 2 is output as the generator torque command to the converter 10 (see FIG. 1) and a multiplication unit 64. In the multiplication unit 64, the generator torque command 2 is multiplied by a ratio -Gr/Gs to be output as ring gear torque to a subtraction unit 65. The subtraction unit 65 subtracts the ring gear torque from the vehicle request torque to output the result as the motor torque command to the inverter 12 (see FIG. 1).

The direct current link power correction value output from this battery temperature control unit 28 is input to a multiplication unit 67 of the battery output control unit 66. The multiplication unit 67 multiplies the direct current link power correction value by the gear number Gs of the sun gear and output the multiplication result to a division unit 68.

In a multiplication unit 69, the rotation number of the motor is multiplied by the gear number Gr of the ring gear, which is output to an addition unit 71 and, meanwhile, in a multiplication unit 70, the rotation number of the generator is multiplied by the gear number Gs of the sun gear, which is output to the addition unit 71. The addition unit 71 adds respective output values from the multiplication units 69 and 70, and outputs the addition result to a division unit 68. The division unit 68 divides the multiplication result of the direct current link power correction value and the gear number Gs of the sun gear by the addition result of the addition unit 71 to compute the generator torque correction value. This generator torque correction value is output to the subtraction unit 63 mentioned above and a multiplication unit 72. In the multiplication unit 72, the generator torque correction value is multiplied by 1/Gs, which is output to a multiplication unit 73. The multiplication unit 73 multiplies the addition result of the addition unit 71 by the multiplication result of the multiplication unit 72 to compute an internal combustion engine output correction value. The multiplication unit 73 is regarded as an internal combustion engine output correction unit. The torque command calculation unit 27 outputs this internal combustion engine output correction value to the addition unit 23.

Then, a battery temperature control method for the main circuit battery 15 in the driving system 1 of the vehicle configured as mentioned above will be described.

First, when starting up the driving system 1, temperature of the main circuit battery 15 is detected, and it is judged whether the temperature needs to be raised. When it is judged that raising temperature is needed, discharge and charge of the main circuit battery 15 are repeatedly performed with discharge voltage and charge voltage mentioned later, respectively, and the temperature of the main circuit battery 15 is raised or suppressed to be controlled at preferable temperature. As an example, the temperature of the main circuit battery 15 that requires raising temperature work is determined as follows.

In the present embodiment, as shown in FIG. 5, the internal combustion engine operation point 81a causes the internal combustion engine output to change in a stepwise or linear manner depending on vehicle request output, which results in controlling the internal combustion engine 2 so as to operate within a high efficiency region as much as possible. In this control, the difference between the vehicle request output (torque request/release command) and the internal combustion engine output is complemented by the main circuit battery 15. However, when the battery temperature is low, the actual battery maximum charge/discharge electrical power is also low, which prevents the internal combustion engine 2 from operating at the ideal internal combustion engine operation point 81a and results in decrease in fuel economy.

In the present embodiment, the temperature of the main circuit battery 15 is raised to temperature at which battery charge/discharge electrical power is required for operation of the internal combustion engine 2 at the ideal point can be output. Note that the main circuit battery 15 is incorporated in the driving system 1 and, thus, the lowest temperature detected in the driving system 1 is employed as a criterion for judging whether raising temperature is to be carried out.

Next, based on the detected battery temperature, the upper limit value and the lower limit value of the battery SOC is determined. When the SOC estimation value is equal to or larger than the SOC upper limit value, the battery discharge command is set and the main circuit battery 15 is discharged. On the other hand, when the SOC estimation value is equal to or smaller than the SOC lower limit value, the battery discharge command is reset and the main circuit battery 15 is charged by a battery charge command.

Herein, it is preferable to set the SOC upper limit value and the SOC lower limit value of the temperature range for performing a battery temperature rising control to SOC that allows for minimum required output, rather than to SOC that makes the battery charge/discharge electrical power zero. (For example, in the case of the lower limit value, an SOC value that allows for output required for cranking the internal combustion engine.)

Also, when as rapid temperature rising as possible is desired, a rapid temperature rising request signal may be issued to set SOC as a target value that maximizes the sum of maximum charge electrical power and maximum discharge electrical power at the battery temperature. The maximum charge electrical power and the maximum discharge electrical power may be repeated within the slight SOC range obtained by adding and subtracting the fixed value of 1% which is the ΔSOC mentioned above, to and from the SOC target value as a center. Furthermore, the battery maximum discharge electrical power map 51 and the battery maximum charge electrical power map 52 shown in FIGS. 3 and 7 mentioned above are used to determine the maximum discharge electrical power and the maximum charge electrical power of the main circuit battery 15 from the battery temperature and the SOC estimation value.

Herein, when a switching signal (ON signal) that is the battery discharge command output from the flip-flop circuit 39 is input to the switching terminal of the changeover switch 53, the battery maximum discharge electrical power is set to the battery output target value. On the other hand, when an OFF signal of the battery discharge command is input to the switching terminal of the changeover switch 53, the battery maximum discharge electrical power is set to the battery output target value.

After this setting, the difference obtained by subtracting the battery output target value from the battery output detection value in the subtraction unit 55 is treated as the battery output correction value. This battery output correction value passes through the PI control unit 60 to compute a direct current link power correction value, which is output to the battery output control unit 66. The subtraction unit 55 is regarded as a battery output correction unit.

Next, the battery output control unit 66 divides the input direct current link power correction value by the summed value of the rotation number of the motor and the rotation number of the generator to compute the generator torque correction value. The battery output control unit 66 is regarded as a generator torque correction unit. The generator torque command 2 is calculated a gear ratio (-Gs/(Gr + Gs)) of the power dividing mechanism to compute from the generator torque correction value. Similarly, the generator torque correction value is multiplied by a gear ratio (1/Gs) of the power dividing mechanism and is further multiplied by the summed value of the rotation number of the motor and the rotation number of the generator to compute the internal combustion engine output correction value. Also, the generator torque command 2 is multiplied by a gear ratio (-Gr/Gs) of the power dividing mechanism to compute the ring gear torque . This ring gear torque is subtracted from the vehicle request torque to compute the motor torque command.

Note that, when correction of the internal combustion engine output request using the internal combustion engine output correction value results in excessing internal combustion engine maximum output, the limiter unit 24 and the subtraction unit 26 is used to compute the internal combustion engine maximum output excess value. Furthermore, the addition unit 59 shown in FIG. 3 may be used to add the battery output correction value to the internal combustion engine maximum output excess value to prevent saturation in the PI control unit 60.

As described above, the vehicle of the present embodiment calculates, from the battery temperature and the SOC estimation value, the battery maximum charge/discharge electrical power, which is set as the battery output target value. Also, feed-back control is used such that a PI control unit calculates and outputs the direct current link power correction value by using the battery output correction value that is the difference between the detected battery output detection value and the battery output target. The generator torque and the internal combustion engine output are corrected with this direct current link power correction value and the vehicle request torque is thus output. Even in case of occurrence of disturbance such as load variation of the auxiliary apparatuses, the battery charge/discharge electrical power is controlled to the target value, which allows the battery temperature to be raised in a short time without the main circuit battery reaching the protection voltage. Furthermore, even in case of the occurrence of the disturbance or the like, the battery maximum charge/discharge electrical power can be output, which allows the temperature of the main circuit battery to be raised in a shorter time than before.

### [Second Embodiment]

A second embodiment, which has a similar configuration to the first embodiment mentioned above, will be described using the same reference signs.

In the present embodiment, a driving system 1 raises temperature of a main circuit battery 15 to a level at which desired battery output can be output, which results in control with internal combustion engine efficiency being prioritized. In this case, a difference between vehicle request output (torque request/release command) and internal combustion engine output is complemented by the main circuit battery 15. However, outside air temperature, cooling performance of the main circuit battery 15, or battery output pattern may cause the battery temperature to rise gradually and reach protection temperature. In order to prevent this, when the battery temperature is higher than set temperature, limitation will be applied to battery output. This set temperature is a value which is appropriately determined when designing the system, and for example, is set to 40°C.

In limiting the battery output, first, a battery temperature control unit 28 uses a battery maximum discharge electrical power map 51 and a battery maximum charge electrical power map 52 to set an upper limit value and a lower limit value of the battery output from the battery temperature and battery SOC. Next, excess of a battery output detection value is computed and this excess is regarded as a battery output correction value. A PI control unit 60 calculates a direct current link power correction value from the battery output correction value.

A generator/motor torque command calculation unit 27 (hereinafter referred to as torque command calculation unit 27) calculates a generator torque correction value and an internal combustion engine output correction value from the direct current link power correction value, a rotation number of the motor, a rotation number of the generator, and gear ratios of a power dividing mechanism.

Using these generator torque correction value and internal combustion engine output correction value allows for controlling battery charge/discharge electrical power while outputting vehicle request torque. Furthermore, unless the main circuit battery 15 reaches temperature protection at high temperature side, the driving system 1 can be operated mainly by the internal combustion engine, which realizes enhancement of fuel economy of the vehicle. Note that a map may be created to be utilized for battery output limit values at the high temperature side as is done during low temperature.

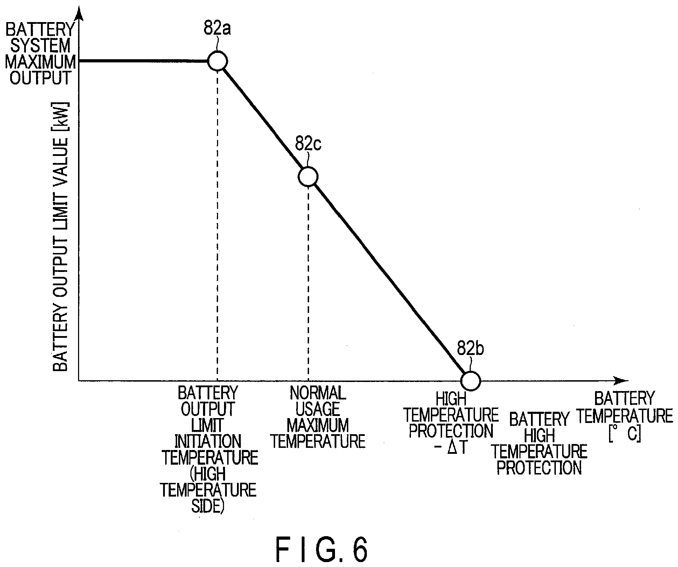

How the output limit value at the high temperature side is determined is as follows. First, the battery output is set to zero so that a temperature state of the battery will be at a point 82b that is a few degrees Celsius lower than temperature of high temperature protection shown in FIG. 6. Next, normal usage maximum temperature of a point 82c shown in FIG. 6 is defined based on expected life time of the main circuit battery 15. Based on this normal usage maximum temperature, assumed maximum environmental temperature, and thermal resistance of battery system, cooling capacity of the battery system is computed. Then, battery output which will generate equal amount of heat to this cooling capacity at end of the battery life time is treated as the limit value.

Also, during vehicle stop, the battery temperature control unit 28 predicts three hours later temperature of the main circuit battery 15 from the current battery temperature, predicted three hours later environmental temperature, and the cooling capacity of the battery system. The battery temperature control unit 28 computes the battery maximum discharge electrical power from the predicted battery temperature and the battery SOC. In a case where this battery maximum discharge electrical power is under electrical power required for engine cranking, the battery SOC is increased until the electrical power required for engine cranking is generated. Performing this process every three hours can prevent inability of engine cranking even in a long-term stop state of the vehicle. Conversely, when the vehicle is under cryogenic environment, and the required electrical power cannot be output even with increased battery SOC, battery temperature rising operation is performed during a time when the SOC is being adjusted so that the electrical power required for the engine cranking can be output.

In the battery temperature rising operation during the vehicle stop mentioned above, locking a wheel 6 in a state where the power dividing mechanism 8, the motor 4, and the wheel 6 are joined together prevents a ring gear R from rotating. After controlling, from the internal combustion engine 2, the generator 9 to charge the main circuit battery 15, the power dividing mechanism 8 and the motor 4 are separated from the wheel 6. This allows the ring gear and the motor 4 to rotate freely and the main circuit battery 15 to be discharged, in a state where the internal combustion engine 2 has stopped, to increase the speed of the motor 4 to a target speed. After the target speed is reached, regeneration of the motor 4 by using kinetic energy of the motor 4 and surrounding gears causes the main circuit battery 15 to be charged by recovery. This operation is repeatedly performed and the battery charge and discharge are performed, which allows the temperature of the main circuit battery 15 to be raised while suppressing fuel consumption of the internal combustion engine 2 as much as possible.

Also, the point 82b and the point 82c shown in FIG. 6 are connected by a straight line and the line is extended to a point 82a at which it crosses a preset battery system maximum output. This point 82a is regarded as battery output limit initiation temperature at the high temperature side. Based on the straight line of the characteristics diagram shown in FIG.6, a battery output limit value with respect to battery temperature is determined. Note that the main circuit battery 15 in the driving system 1 is not limited to one. A configuration in which a plurality of main circuit batteries 15 are mounted or installation location makes a difference in cooling condition, which results in some temperature variation. For this reason, as for the main circuit battery 15, it is preferable that the lowest temperature in the driving system 1 is set to the detection temperature at the low temperature side and, in contrast, the highest temperature in the driving system 1 is set to the detection temperature at the high temperature side.

According to the present embodiment described above, using these generator torque correction value and internal combustion engine output correction value allows for controlling battery charge/discharge electrical power while outputting vehicle request torque. Furthermore, when the main circuit battery 15 does not reach temperature protection at high temperature side, the driving system 1 can be operated mainly by the internal combustion engine, which realizes enhancement of fuel economy of the vehicle. Note that a map may be created to be utilized for battery output limit values at the high temperature side as is done during low temperature.

### REFERENCE SIGNS LIST

1 driving system; 2 internal combustion engine; 3 power transmission system; 4 motor; 5 axle; 6 wheel; 7 hybrid controller; 8 power dividing mechanism; 9 generator; 10 converter; 11 direct current link; 12 inverter; 13 transmission member; 14 power coupling mechanism; 15 main circuit battery; 16 contactor; 17 auxiliary apparatus power unit; 21 system power/vehicle request torque calculation unit; 22 internal combustion engine output calculation unit; 23 and 35 addition unit; 24 limiter unit; 25 internal combustion engine operation point determination unit; 26, 42, 55, and 56 subtraction unit; 27 generator/motor torque command calculation unit (torque command calculation unit) ; 28 battery temperature control unit; 31 and 58 schmitt trigger unit; 32, 43, and 57 changeover switch; 33 SOC setting unit; 36 changeover switch; 37 SOC upper limit value map; 38 comparison unit; 39 flip-flop circuit; 40 SOC lower limit value map; 44 comparison unit; 51 battery maximum discharge electrical power map; 52 battery maximum charge electrical power map; 53 changeover switch; 54 variable limiter unit; 60 PI control unit; 66 battery output control unit.

## Claims

1. A vehicle comprising:
an internal combustion engine (2) that outputs mechanical energy;
a power dividing mechanism that comprises a gear mechanism including a sun gear (S) and a ring gear (R) and divides to output the mechanical energy;
a generator (9) that converts at least a part of the mechanical energy to electrical energy;
a converter (10) that controls operation of the generator;
an inverter (12) that is electrically connected to the converter via a direct current link;
a main circuit battery (15) that is electrically connected to the direct current link (11);
a motor (4) that is driven by electrical energy supplied from the inverter (12);
a power coupling mechanism (14) that is mechanically connected to a rotation axis of the motor (4) and couples mechanical energy generated by the motor and mechanical energy divided and transmitted via a transmission member (13) from the power dividing mechanism (8);
an axle (5) that is driven by the mechanical energy coupled by the power coupling mechanism (14); and
a control unit (28) that controls temperature of the main circuit battery (15);
wherein the control unit (28) comprises:
respective electrical power maps of battery maximum discharge electrical power and battery maximum charge electrical power defined in terms of battery temperature and a state of charge (SOC) estimation value detected from the main circuit battery (15), the respective electrical power maps being preset;
an SOC usable range map that includes SOC upper limit values and SOC lower limit values defined in terms of the battery temperature of the main circuit battery (15), the SOC usable range map being preset;
a charge and discharge command unit (39) that issues a battery discharge command when the battery SOC estimation value is equal to or larger than a SOC upper limit value and issue a battery charge command when the battery SOC estimation value is equal to or smaller than a SOC lower limit value, the SOC upper limit value and the SOC lower limit value being set from the detected battery temperature using the SOC usable range map;
**characterized by** that the vehicle further comprises:
a battery output target setting unit (55, 56) that sets, when the battery discharge command is issued, the battery maximum discharge electrical power selected from the electrical power map to be a battery output target value for raising temperature and set, when the battery charge command is issued, the battery maximum charge electrical power from the electrical power map to be the battery output target value for raising temperature;
a battery output correction unit (55) that computes a battery output correction value for raising temperature from a difference between the battery output target value for raising temperature and a battery output detection value detected from the main circuit battery (15);
a PI control unit (60) that calculates a direct current link power correction value for correcting generator torque by performing a PI control on the battery output correction value;
a torque correction unit that calculates a generator torque correction value based on the direct current link power correction value, a gear number of the sun gear (S) and a gear number of the ring gear (R) of the power dividing mechanism (8), and rotation numbers of the motor (4) and the generator (9); and
an internal combustion engine output correction unit that corrects internal combustion engine output based on the generator torque correction value, the gear number of the sun gear and the gear number of the ring gear, and the rotation numbers of the motor and the generator;
wherein the control unit (28) is configured to,
when determining the SOC upper limit value, the SOC lower limit value, the battery maximum discharge electrical power, and the battery maximum charge electrical power,
use a lowest battery temperature in the vehicle during low temperature, and
use a highest battery temperature in the vehicle during high temperature as battery temperature to be input, and
prevent a driving system (1) from being stopped by temperature or voltage protection due to variation of battery temperature in the driving system and control output of the main circuit battery (15) to a target value to raise the temperature of the main circuit battery (15) while satisfying vehicle request torque.

2. The vehicle according to claim 1,
wherein the control unit (28) is further configured to:
determine, from the detected battery temperature, SOC as a target value such that a sum of battery maximum discharge electrical power and battery maximum charge electrical power is maximized, and set a range by adding and subtracting a slight fixed value to and from the target value as a center to repeatedly perform discharge with the battery maximum discharge electrical power and charge with the battery maximum charge electrical power; and
control the output of the main circuit battery (15) to the target value to raise the temperature of the main circuit battery while satisfying the vehicle request torque.

3. The vehicle according to claim 1,
wherein the control unit (28) is configured to:
when the main circuit battery has higher temperature than set temperature,
add a battery output correction value derived based on the battery maximum discharge electrical power or the battery maximum charge electrical power and excess of the battery output detection value to derive a battery output correction value for suppressing temperature rising, perform the PI control on the battery output correction value, and calculate the direct current link power correction value;
calculate a generator torque correction value based on the direct current link power correction value, the gear number of the sun gear (S) and the gear number of the ring gear (R), the rotation number of the motor (4), and the rotation number of the generator (9);
correct internal combustion engine output based on the generator torque correction value, the gear number of the sun gear (S) and the gear number of the ring gear (R), and the rotation numbers of the motor (4) and the generator (9); and
control the output of the main circuit battery (15) to the target value to suppress temperature rising of the main circuit battery while satisfying the vehicle request torque.

4. The vehicle according to claim 1,
wherein the control unit (28) is configured to
add an internal combustion engine maximum output excess value to the battery output correction value when a value resulting from determining an internal combustion engine output request from a system power request computed from a torque request and the rotation number of the motor (4) and adding an internal combustion engine output correction value excesses the maximum output of the internal combustion engine, and prevent saturation of the PI control.

## Patentansprüche

1. Fahrzeug, umfassend:
einen Verbrennungsmotor (2), der mechanische Energie abgibt;
einen Leistungsteilungsmechanismus, der einen Getriebemechanismus einschließlich eines Sonnenrads (S) und eines Hohlrads (R) umfasst und der teilt, um die mechanische Energie abzugeben;
einen Generator (9), der mindestens einen Teil der mechanischen Energie in elektrische Energie umwandelt;
einen Umrichter (10), der den Betrieb des Generators steuert;
einen Wechselrichter (12), der mit dem Umrichter über einen Gleichstromzwischenkreis elektrisch verbunden ist;
eine Hauptstromkreisbatterie (15), die mit dem Gleichstromzwischenkreis (11) elektrisch verbunden ist;
einen Motor (4), der durch die von dem Wechselrichter (12) gelieferte elektrische Energie angetrieben wird;
einen Leistungskopplungsmechanismus (14), der mit einer Drehachse des Motors (4) mechanisch verbunden ist und von dem Motor erzeugte mechanische Energie und über ein Übertragungselement (13) von dem Leistungsteilungsmechanismus (8) geteilte und übertragene mechanische Energie koppelt;
eine Achse (5), die von der durch den Leistungskopplungsmechanismus (14) gekoppelten mechanischen Energie angetrieben wird; und
eine Steuereinheit (28), welche die Temperatur der Hauptstromkreisbatterie (15) steuert;
wobei die Steuereinheit (28) umfasst:
entsprechende elektrische Leistungsabbildungen der maximalen elektrischen Entladeleistung der Batterie und der maximalen elektrischen Ladeleistung der Batterie, die in Bezug auf die Batterietemperatur und einen von der Hauptstromkreisbatterie (15) detektierten Ladezustandsschätzwert (SOC-Schätzwert) definiert sind, wobei die entsprechenden elektrischen Leistungsabbildungen voreingestellt sind;
eine SOC-Nutzbereichsabbildung, die SOC-Obergrenzwerte und SOC-Untergrenzwerte umfasst, die in Bezug auf die Batterietemperatur der Hauptstromkreisbatterie (15) definiert sind, wobei die SOC-Nutzbereichsabbildung voreingestellt ist;
eine Lade- und Entladebefehlseinheit (39), die einen Batterieentladebefehl ausgibt, wenn der Batterie-SOC-Schätzwert gleich oder größer als ein SOC-Obergrenzwert ist, und einen Batterieladebefehl ausgibt, wenn der Batterie-SOC-Schätzwert gleich oder kleiner als ein SOC-Untergrenzwert ist, wobei der SOC-Obergrenzwert und der SOC-Untergrenzwert von der detektierten Batterietemperatur unter Verwendung der SOC-Nutzbereichsabbildung eingestellt werden;
**dadurch gekennzeichnet, dass** das Fahrzeug ferner umfasst:
eine Batterieausgangsleistungssollwerteinstelleinheit (55, 56), die bei Ausgabe des Batterieentladebefehls die aus der elektrischen Leistungsabbildung ausgewählte maximale elektrische Entladeleistung der Batterie als einen Batterieausgangsleistungssollwert zum Erhöhen der Temperatur einstellt und bei Ausgabe des Batterieladebefehls die maximale elektrische Ladeleistung der Batterie aus der elektrischen Leistungsabbildung als den Batterieausgangsleistungssollwert zum Erhöhen der Temperatur einstellt;
eine Batterieausgangsleistungskorrektureinheit (55), die einen Batterieausgangsleistungskorrekturwert zum Erhöhen der Temperatur aus einer Differenz zwischen dem Batterieausgangsleistungssollwert zum Erhöhen der Temperatur und einem von der Hauptstromkreisbatterie (15) detektierten Batterieausgangsleistungsdetektionswert berechnet;
eine PI-Regelungseinheit (60), die einen
Gleichstromzwischenkreisleistungskorrekturwert zum Korrigieren des Generatordrehmoments durch Ausführen einer PI-Regelung an dem Batterieausgangsleistungskorrekturwert berechnet;
eine Drehmomentkorrektureinheit, die basierend auf dem Gleichstromzwischenkreisleistungskorrekturwert, einer Zahnradzahl des Sonnenrads (S) und einer Zahnradzahl des Hohlrads (R) des Leistungsteilungsmechanismus (8) und Drehzahlen des Motors (4) und des Generators (9) einen Generatordrehmomentkorrekturwert berechnet; und
eine Verbrennungsmotorausgangsleistungskorrektureinheit, die basierend auf dem Generatordrehmomentkorrekturwert, der Zahnradzahl des Sonnenrads und der Zahnradzahl des Hohlrads und den Drehzahlen des Motors und des Generators die Verbrennungsmotorausgangsleistung korrigiert;
wobei die Steuereinheit (28) konfiguriert ist zum,
wenn der SOC-Obergrenzwert, der SOC-Untergrenzwert, die maximale elektrische Entladeleistung der Batterie und die maximale elektrische Ladeleistung der Batterie bestimmt wird,
Verwenden einer niedrigsten Batterietemperatur in dem Fahrzeug während niedriger Temperatur und
Verwenden einer höchsten Batterietemperatur in dem Fahrzeug während hoher Temperatur als einzugebende Batterietemperatur und Verhindern, dass ein Antriebssystem (1) aufgrund von Schwankungen der Batterietemperatur in dem Antriebssystem durch einen Temperatur- oder Spannungsschutz gestoppt wird, und Steuern der Leistung der Hauptstromkreisbatterie (15) auf einen Sollwert, um die Temperatur der Hauptstromkreisbatterie (15) zu erhöhen, während das Anforderungsdrehmoment des Fahrzeugs erfüllt wird.

2. Fahrzeug nach Anspruch 1,
wobei die Steuereinheit (28) ferner konfiguriert ist zum:
Bestimmen, von der detektierten Batterietemperatur, des SOC als einen Sollwert, sodass eine Summe der maximalen elektrischen Entladeleistung der Batterie und der maximalen elektrischen Ladeleistung der Batterie maximiert wird, und Einstellen eines Bereichs durch Addieren und Subtrahieren eines geringen Festwerts zu und von dem Sollwert als eine Mitte, um ein Entladen mit der maximalen elektrischen Entladeleistung der Batterie und ein Laden mit der maximalen elektrischen Ladeleistung der Batterie wiederholt auszuführen; und
Steuern der Ausgangsleistung der Hauptkreisbatterie (15) auf den Sollwert, um die Temperatur der Hauptkreisbatterie zu erhöhen, während das Fahrzeuganforderungsdrehmoment erfüllt wird.

3. Fahrzeug nach Anspruch 1,
wobei die Steuereinheit (28) konfiguriert ist zum:
wenn die Hauptstromkreisbatterie eine höhere Temperatur als die Solltemperatur aufweist,
Addieren eines Batterieausgangsleistungskorrekturwerts, der basierend auf der maximalen elektrischen Entladeleistung der Batterie oder der maximalen elektrischen Ladeleistung der Batterie und einem Überschuss des Batterieausgangsleistungsdetektionswerts abgeleitet wird, um einen Batterieausgangsleistungskorrekturwert zum Unterdrücken eines Temperaturanstiegs abzuleiten, Ausführen der PI-Regelung für den Batterieausgangsleistungskorrekturwert und Berechnen des Gleichstromzwischenkreisleistungskorrekturwerts;
Berechnen eines Generatordrehmomentkorrekturwerts basierend auf dem Gleichstromzwischenkreisleistungskorrekturwert, der Zahnradzahl des Sonnenrads (S) und der Zahnradzahl des Hohlrads (R), der Drehzahl des Motors (4) und der Drehzahl des Generators (9);
Korrigieren der Verbrennungsmotorausgangsleistung basierend auf dem Generatordrehmomentkorrekturwert, der Zahnradzahl des Sonnenrads (S) und der Zahnradzahl des Hohlrads (R) und den Drehzahlen des Motors (4) und des Generators (9); und
Steuern der Ausgangsleistung der Hauptstromkreisbatterie (15) auf den Sollwert, um einen Temperaturanstieg der Hauptstromkreisbatterie zu unterdrücken, während das Fahrzeuganforderungsdrehmoment erfüllt wird.

4. Fahrzeug nach Anspruch 1,
wobei die Steuereinheit (28) konfiguriert ist, einen Verbrennungsmotormaximalausgangsleistungsüberschusswert zu dem Batterieausgangsleistungskorrekturwert zu addieren, wenn ein Wert, der aus dem Bestimmen einer Verbrennungsmotorausgangsleistungsanforderung von einer aus einer Drehmomentanforderung und der Drehzahl des Motors (4) berechneten Systemleistungsanforderung resultiert, und das Addieren eines Verbrennungsmotorausgangsleistungskorrekturwerts die maximale Ausgangsleistung des Verbrennungsmotors übersteigt, und eine Sättigung der PI-Regelung zu verhindern.

## Revendications

1. Véhicule comprenant :
un moteur à combustion interne (2) qui délivre une énergie mécanique ;
un mécanisme de division de puissance qui comprend un mécanisme d'engrenage incluant une roue solaire (S) et une couronne dentée (R) et divise pour délivrer l'énergie mécanique ;
un générateur (9) qui convertit au moins une partie de l'énergie mécanique en énergie électrique ;
un convertisseur (10) qui commande un fonctionnement du générateur ;
un onduleur (12) qui est électriquement relié au convertisseur via une liaison de courant continu ;
une batterie de circuit principal (15) qui est électriquement reliée à la liaison de courant continu (11) ;
un moteur (4) qui est entraîné par une énergie électrique fournie à partir de l'onduleur (12) ;
un mécanisme de couplage de puissance (14) qui est mécaniquement relié à un axe de rotation du moteur (4) et couple une énergie mécanique générée par le moteur et une énergie mécanique divisée et transmise via un élément de transmission (13) à partir du mécanisme de division de puissance (8);
un essieu (5) qui est entraîné par l'énergie mécanique couplée par le mécanisme de couplage de puissance (14) ; et
une unité de commande (28) qui commande une température de la batterie de circuit principal (15) ;
dans lequel l'unité de commande (28) comprend :
des cartes de puissance électrique respectives de puissance électrique de décharge maximale de batterie et de puissance électrique de charge maximale de batterie définies en termes de température de batterie et d'une valeur d'estimation d'état de charge (SOC) détectée à partir de la batterie de circuit principal (15), les cartes de puissance électrique respectives étant préréglées ;
une carte de plage utilisable de SOC qui inclut des valeurs de limite supérieure de SOC et des valeurs de limite inférieure de SOC définies en termes de la température de batterie de la batterie de circuit principal (15), la carte de plage utilisable de SOC étant préréglée ;
une unité d'instruction de charge et de décharge (39) qui émet une instruction de décharge de batterie lorsque la valeur d'estimation de SOC de batterie est supérieure ou égale à une valeur de limite supérieure de SOC et émet une instruction de charge de batterie lorsque la valeur d'estimation de SOC de batterie est inférieure ou égale à une valeur de limite inférieure de SOC, la valeur de limite supérieure de SOC et la valeur de limite inférieure de SOC étant réglées à partir de la température de batterie détectée en utilisant la carte de plage utilisable de SOC ;
**caractérisé en ce que** le véhicule comprend en outre :
une unité de réglage de cible de sortie de batterie (55, 56) qui règle, lorsque l'instruction de décharge de batterie est émise, la puissance électrique de décharge maximale de batterie sélectionnée à partir de la carte de puissance électrique pour être une valeur de cible de sortie de batterie pour une augmentation de température et règle, lorsque l'instruction de charge de batterie est émise, la puissance électrique de charge maximale de batterie à partir de la carte de puissance électrique pour être la valeur de cible de sortie de batterie pour une augmentation de température ;
une unité de correction de sortie de batterie (55) qui calcule une valeur de correction de sortie de batterie pour une augmentation de température à partir d'une différence entre la valeur de cible de sortie de batterie pour une augmentation de température et une valeur de détection de sortie de batterie détectée à partir de la batterie de circuit principal (15) ;
une unité de commande de PI (60) qui calcule une valeur de correction de puissance de liaison de courant continu pour corriger un couple de générateur par la réalisation d'une commande de PI sur la valeur de correction de sortie de batterie ;
une unité de correction de couple qui calcule une valeur de correction de couple de générateur sur la base de la valeur de correction de puissance de liaison de courant continu, d'un nombre de pignons de la roue solaire (S) et d'un nombre de pignons de la couronne dentée (R) du mécanisme de division de puissance (8), et de nombres de tours du moteur (4) et du générateur (9) ; et
une unité de correction de sortie de moteur à combustion interne qui corrige une sortie de moteur à combustion interne sur la base de la valeur de correction de couple de générateur, du nombre de pignons de la roue solaire et du nombre de pignons de la couronne dentée, et des nombre de tours du moteur et du générateur ;
dans lequel l'unité de commande (28) est configurée pour :
lors de la détermination de la valeur de limite supérieure de SOC, la valeur de limite inférieure de SOC, la puissance électrique de décharge maximale de batterie et la puissance électrique de charge maximale de batterie,
utiliser une température de batterie la plus basse dans le véhicule à basse température, et
utiliser une température de batterie la plus haute dans le véhicule à haute température en tant que température de batterie à entrer, et
interdire un arrêt d'un système d'entraînement (1) par une protection de température ou de tension en raison d'une variation de température de batterie dans le système d'entraînement et commander une sortie de la batterie de circuit principal (15) à une valeur de cible pour augmenter la température de la batterie de circuit principal (15) tout en satisfaisant une demande de couple de véhicule.

2. Véhicule selon la revendication 1,
dans lequel l'unité de commande (28) est en outre configurée pour :
déterminer, à partir de la température de batterie détectée, un SOC en tant qu'une valeur de cible de sorte qu'une somme d'une puissance électrique de décharge maximale de batterie et d'une puissance électrique de charge maximale de batterie soit maximisée, et régler une plage par l'addition et la soustraction d'une petite valeur fixe à la valeur de cible en tant que centre pour réaliser à répétition une décharge avec la puissance électrique de décharge maximale de batterie et une charge avec la puissance électrique de charge maximale de batterie ; et
commander la sortie de la batterie de circuit principal (15) à la valeur de cible pour augmenter la température de la batterie de circuit principal tout en satisfaisant la demande de couple de véhicule.

3. Véhicule selon la revendication 1,
dans lequel l'unité de commande (28) est configurée pour :
lorsque la batterie de circuit principal a une température supérieure à une température réglée,
ajouter une valeur de correction de sortie de batterie dérivée sur la base de la puissance électrique de décharge maximale de batterie ou de la puissance électrique de charge maximale de batterie et un excédent de la valeur de détection de sortie de batterie pour dériver une valeur de correction de sortie de batterie pour supprimer une augmentation de température, réaliser la commande de PI sur la valeur de correction de sortie de batterie, et calculer la valeur de correction de puissance de liaison de courant continu ;
calculer une valeur de correction de couple de générateur sur la base de la valeur de correction de puissance de liaison de courant continu, du nombre de pignons de la roue solaire (S) et du nombre de pignons de la couronne dentée (R), du nombre de tours du moteur (4) et du nombre de tours du générateur (9) ;
corriger une sortie de moteur à combustion interne sur la base de la valeur de correction de couple de générateur, du nombre de pignons de la roue solaire (S) et du nombre de pignons de la couronne dentée (R), et des nombre de tours du moteur (4) et du générateur (9) ; et
commander la sortie de la batterie de circuit principal (15) à la valeur de cible pour supprimer une augmentation de température de la batterie de circuit principal tout en satisfaisant la demande de couple de véhicule.

4. Véhicule selon la revendication 1,
dans lequel l'unité de commande (28) est configurée pour :
ajouter une valeur d'excédent de sortie maximale de moteur à combustion interne à la valeur de correction de sortie de batterie lorsqu'une valeur découlant de la détermination d'une demande de sortie de moteur à combustion interne à partir d'une demande de puissance de système calculée à partir d'une demande de couple et du nombre de tours du moteur (4) et de l'ajout d'une valeur de correction de sortie de moteur à combustion interne dépasse la sortie maximale du moteur à combustion interne, et interdire une saturation de la commande de PI.
